(19) Europäisches Patentamt

European Patent Office

Office européen des brevets

(11) Veröffentlichungsnummer: **0 488 102 A2**

# (12) EUROPÄISCHE PATENTANMELDUNG

(21) Anmeldenummer: **91120045.9**

(22) Anmeldetag: **25.11.91**

(30) Priorität: **24.11.90 DE 4037479**
**13.12.90 DE 4039869**
**17.12.90 DE 4040328**
**17.12.90 DE 4040329**
**07.03.91 DE 4107220**
**07.03.91 DE 4107221**
**15.10.91 DE 4134048**

(43) Veröffentlichungstag der Anmeldung:
**03.06.92 Patentblatt 92/23**

(84) Benannte Vertragsstaaten:
**AT BE CH DE DK ES FR GB IT LI LU NL SE**

(51) Int. Cl.5: **G01N 27/12**, G01N 27/18,
**G01N 25/18**

(71) Anmelder: **E.T.R. ELEKTRONIK TECHNOLOGIE
RUMP GMBH**
**Heinrich-Hertz-Strasse 2**
**W-4600 Dortmund 50(DE)**

(72) Erfinder: **Rump, Hanns**
**Biesenkamp 22**
**W-4750 Unna-Massen(DE)**
Erfinder: **Bargmann, Wolf-Dieter**
**Gneisenaustrasse 101**
**W-4330 Mülheim a.d. Ruhr(DE)**
Erfinder: **Kohl, Claus-Dieter**
**Röderring 22**
**W-6300 Giessen(DE)**
Erfinder: **Hiller, Jörg**
**Am Bollwerk 20**
**W-5802 Wetter(DE)**
Erfinder: **Fritz, Torsten**
**Franz-Lehmann-Strasse 23**
**O-8030 Dresden(DE)**
Erfinder: **Böttcher, Horst, Prof. Dr.**
**Ginsterstrasse 26**
**O-8038 Dresden(DE)**

(74) Vertreter: **Spalthoff, Adolf, Dipl.-Ing. et al**
**Spalthoff und Lelgemann, Pelmanstrasse 31**
**W-4300 Essen 1(DE)**

(54) **Verfahren und Vorrichtung zur Gasmessung.**

㉗ Bei einem Verfahren bzw. einer Vorrichtung zur Gasmessung wird ein Halbleitersensorelement eingesetzt. Die Temperatur des Halbleitersensorelements wird gemessen; sein Leitwert bzw. Widerstand ist durch das Meßgas beeinflußbar.

Um bei einem derartigen Verfahren bzw. bei einer solchen Vorrichtung bessere und genauere Meßergebnisse zu erzielen, werden die Temperatur und/oder der Leitwert bzw. Widerstand und/oder die Bedeckung mit Meßgas des Halbleitersensorelements durch Eingriffe beeinflußt und/oder als Meßgröße erfaßt.

EP 0 488 102 A2

Die Erfindung bezieht sich auf ein Verfahren zur Gasmessung, bei dem ein Halbleitersensorelement eingesetzt wird dessen Temperatur gemessen wird und dessen Leitwert bzw. Widerstand durch das Meßgas beeinflußbar ist. Darüber hinaus betrifft die Erfindung eine Vorrichtung zur Gasmessung mit einem Halbleitersensorelement, dessen Temperatur meßbar und dessen Leitwert bzw. Widerstand durch das Meßgas beeinflußbar ist.

Bei der Durchführung derartiger Verfahren sowie bei der Anwendung derartiger Vorrichtungen hat sich herausgestellt, daß die Genauigkeit der ermittelten Meßergebnisse insbesondere deshalb beeinträchtigt wird, da die verwendeten Halbleitersensorelemente in ihren für die Messung geeigneten Parametern stark mit Druck, Temperatur, Zusammensetzung etc. des zu überwachenden Gasstroms schwanken, wobei gegensätzliche Beeinflussungen auftreten können.

Der Erfindung liegt demgemäß die Aufgabe zugrunde, das gattungsgemäße Verfahren bzw. die gattungsgemäße Vorrichtung zur Gasmessung derart weiterzubilden, daß solche Verfälschungen der Meßergebnisse weitestgehend ausgeschlossen werden.

Diese Aufgabe wird erfindungsgemäß dadurch gelöst, daß die Temperatur und/oder der Leitwert bzw. Widerstand und/oder die Bedeckung mit Meßgas des Halbleitersensorelements durch Eingriffe beeinflußt und/oder als Meßgröße erfaßt werden.

Vorteilhafte Weiterbildungen der Erfindung ergeben sich aus den Unteransprüchen.

Zum Beispiel aus der Patentanmeldung EP 0 354 486 A3 ist bekannt, mit Hilfe von Phthalocyanin-Schichten, die auf einem beheizten Träger aufgebracht sind, Stickoxyde bzw. Stickstoffdioxyde sensieren zu können.

Es ist eine Eigenart dieser Sensoren, daß sich beim Vorhandensein von z.B. NO2 dieses an der Oberfläche des Phthalocyanins anlagert, wobei sich die Leitfähigkeit der Phthalocyanin-Schicht verändert.

Um den Phthalocyanin-Sensor zu betreiben, hat sich eine Arbeitstemperatur zwischen 70 und 100 Grad C als vorteilhaft erwiesen. Wird der Sensor mit z.B. NO2 beaufschlagt, verringert sich der Widerstand und bleibt normalerweise auf diesem Niveau, bis er durch Ausheizen mit einer Temperatur von z.B. 150 Grad C wieder in den ursprünglichen Zustand versetzt wird.

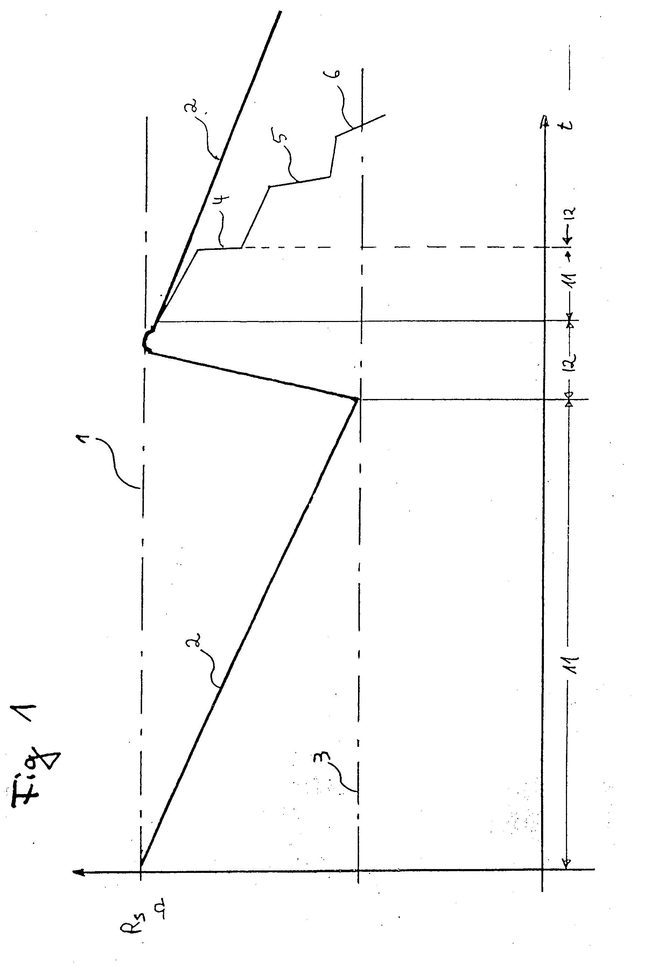

In Figur 1 ist dies deutlich gemacht. Die x-Achse zeigt den Sensorwiderstand, der im unbelasteten Zustand sehr hochohmig ist. Auf der y-Achse ist die Zeit aufgetragen. Im unbelasteten Zustand hat der Sensor einen Anfangsfehlerstand 1. Auch bei kleinen Konzentrationen von z.B. NO2 wird jedoch eine langsame Absenkung des Sensorwiderstandes beobachtet, was durch Anlagerung (Adsorption) von NO2 an der Oberfläche des Phthyalocyanin-Sensors hervorgerufen wird. Es entsteht daher eine Kurve 2. Unterschreitet der Sensorwiderstand ein bestimmtes Maß 3, sollte die Meßphase 11 durch eine Aufheizphase 12 unterbrochen werden, in der der Sensorwiderstand seinen ursprünglichen Wert 1 wieder erreicht.

Es ist bekannt, periodisch, also in bestimmten Zeitabständen, die Meßphase 11 mit einer Aufheizphase 12 abwechseln zu lassen.

Diese Betriebsweise hat den Nachteil, daß die Aufheizphase, in der natürlich nicht gemessen werden kann, möglicherweise zeitgleich mit einem an sich zu registrierenden NO2-Impuls zusammenfällt. Die Erfindung beschreibt einen vorteilhaften Weg, die zur Verfügung stehende Meßzeit optimal zu nutzen, indem die Aufheizphase je nach Belastung gesteuert wird.

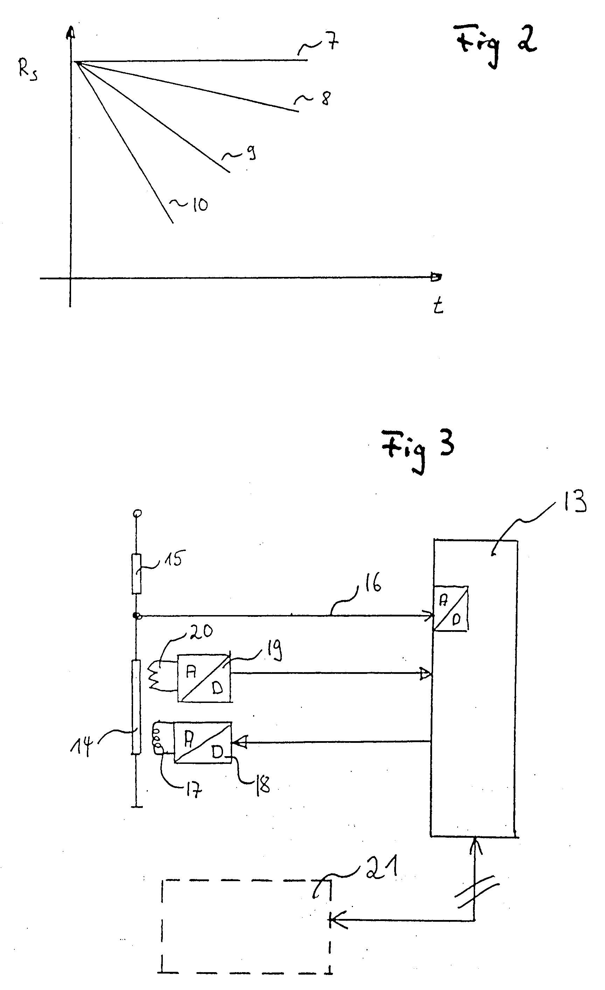

In anderen Anwendungen ist es dagegen erforderlich, daß stets gemssen werden kann. In diesen Fällen werden mindestens zwei Phthalocyanin-Sensoren eingesetzt, wobei durch elektronische Umschaltung jeweils ein Meßsensor arbeitet, während der andere ausgeheizt wird. Die Umschaltpunkte ergeben sich also aus den Einschaltpunkten der Heizung. Eine praktische Ausführung zeigt Figur 3.

Eine zentrale Steuer- und Auswerteeinheit 13 wird in der Regel durch einen Mikrocontroller dargestellt. Der Schichtwiderstand des Pc-Films bildet einen Spannungsleiter mit einem Außenwiderstand 15 oder einer Konstantstromquelle, wobei die elektrische Leitung 16 eine Spannung über einen Analog-Digital-Wandler zum Mikroprozessor gibt, die dem Sensorwiderstand entspricht.

Die Sensorheizung 17 wird über einen Heizungsregler 18 gespeist, der durch den Mikroprozessor 13 kontrolliert wird. Der Sensor enthält einen Thermo-Widerstand 20, dessen Werte über einen Analog-Digital-Wandler 19 zum Mikroprozessor 13 weitergeleitet werden. Eine identische Konfiguration 21 ist schematisch dargestellt. Mit Hilfe dieser Anordnung werden die Sensorsignale gelesen und wird die Heiztemperatur in der Meßphase auf einem stabilen Niveau gehalten, bzw. wird die Ausheizphase auf einem ebenfalls stabilisierten und geregelten Temperaturniveau betrieben.

Im Gegensatz zu anderen Sensortypen gibt der Sensorwiderstand bei Phthalocyanin-NOx-Sensoren nicht unbedingt Aufschluß über die momentan vorliegende Konzentration, weil der zeitliche Abstand zur letzten Ausheizphase bzw. die Beeinflussung durch vorhandenes NOx den Sensorwiderstand erheblich verschieben kann. Um Rückschlüsse auf die tatsächlich vorhandene Konzentration zulassen zu können, empfiehlt es sich, den Änderungsbetrag des Sensorwiderstandes über die Zeit als Größe herauszuziehen.

Wie vorstehend erwähnt, wird in der praktischen Betriebssituation aufgrund der fast immer vorhandenen geringen NOx-Konzentrationen ein kontinuierlicher Abfall des Sensorwiderstandes zu beobachten sein, wobei die Abfallzeit abhängig ist von den Exemplarstreuungen des Sensors als auch von der zufällig vorhandenen NOx-Konzentration.

Während der Anfangswiderstand des Sensors 1 natürlich festliegt, wird ein niedrigerer Sensorwiderstand 2 definiert. Dieser Widerstand wird so gewählt werden, daß er in ausreichendem Abstand zur absoluten Sättigung der Sensoroberfläche liegt. Es hat sich gezeigt, daß es vorteilhaft ist, nicht die vollständige Sättigung des Sensors abzuwarten, weil eine frühere Aufheizung die Abreinigungszeit verkürzt.

Wie aus Figur 1 ersichtlich, sinkt der Sensorwiderstand 2 von einem Ausgangswert 1 bis zum Erreichen eines unteren Grenzwertes 3. Durch Ausheizen wird im weiteren Verlauf der Ausgangswert wieder erreicht.

In diesem Falle wird die Meßperiode 11 beendet durch Erreichen des unteren Grenzwertes.

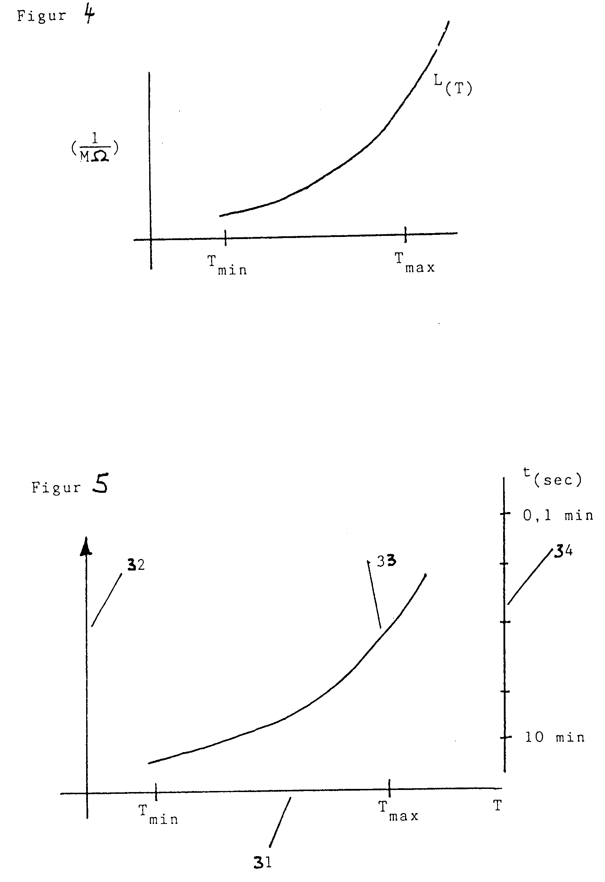

In Figur 1 ist im weiteren Verlauf der Kurve 2 gezeigt, wie sich Gasbelastungen 4, 5, 6 auf den Sensorwiderstand auswirken. Es kommt zu einer treppenartigen Ausformung der Kurve. Es hat sich als sinnvoll erwiesen, die Abreinigung hier erheblich früher einsetzen zu lassen. Ein praktischer Vorschlag ist, die Abreinigung entweder bei einem bestimmten Widerstandssprung über eine bestimmte Zeit (z.B. Figur 1, 4) oder aber nach einem solchen Sprung, wenn eine weitere Grenze 22 dabei unterschritten worden ist (siehe Figur 1, 5).

Da in zahlreichen Anwendungen beim Auftreten eines NOx-Impulses ohnehin ein Schaltimpuls ausgelöst wird, wenn der NOx-Impuls eine bestimmte Größe aufweist, würde in einem solchen Fall die Aufheizzeit - in der nicht gemessen werden kann - für den Betrieb mancher Gerätschaften nicht so wesentlich sein. In diesem Fall würde durch die vorstehend beschriebene Methode durchaus ein einziger Sensor genügen.

Figur 2 zeigt die prinzipielle Darstellung dieser Überlegung:
Die Kurve 7 zeigt in Abwesenheit von NOx eine zeitliche Abnahme (durch Desorption von NOx), die von der Temperatur und dem momentanen Leitwert abhängt. (Der momentane Leitwert wird durch die Menge des bis dahin adsorbierten NOx festgelegt). Die zeitliche Abnahme verringert sich oder wird sogar zur Zunahme (beides durch weitere Adsorption), wenn NOx anwesend ist. Zur Auswertung wird eine Tabelle benötigt, die zu jedem Leitwert der Schicht, die Abnahme des Leitwertes in Abwesenheit von NOx angibt.

Die Kurven 8, 9 und 10 haben eine unterschiedliche Steigung, d.h. bei Änderungsbetrag des Sensorwiderstandes über die Zeit ist unterschiedlich und kann jeweils einer spezifischen Gaskonzentration zugeordnet werden. Daraus folgt, daß zur Bestimmung der absoluten Pegel weniger der erreichte Sensorwiderstand herangezogen wird als vielmehr der Änderungsbetrag über die Zeit.

Insofern wird erfindungsgemäß vorgeschlagen, von einer zentralen Steuer- und Auswerteeinheit 13 kontinuierlich - in der bevorzugten Ausführung etwa 2 - 10 mal pro Sekunde - den Sensorwiderstand zu bestimmen und aus den Änderungsbeträgen über die Zeit mit Hilfe einer Rechenoperation auf die Konzentration zu schließen.

Die Auswerte- und Steuereinheit enthält im Programm Informationen, die die spezifische Reaktionsgeschwindigkeit des Sensors gegenüber spezifischen Gaskonzentrationen beschreibt.

Es ist bekannt, daß Halbleiter eine starke Leitwertzunahme mit der Temperatur haben, die in vielen Fällen exponentiell ist.

Dieser Grundleitwert kann zusätzlich durch eine adsorbierte Gasschicht verändert werden. Figur 4 zeigt beispielhaft eine derartige Kennlinie eines gasempfindlichen Halbleiters ohne Gasangebot.

Es ist weiter bekannt, daß die Verweildauer des adsorbierten Gases von der Temperatur des Halbleiters abhängt. In der Regel ist die Verweildauer bei niedrigen Temperaturen um Größenordnungen länger als bei hohen Temperaturen. Figur 5 zeigt am Beispiel eines Phthalocyanin-Halbleiters, der mit $NO_2$ beaufschlagt wird, diese Abhängigkeit auf. Dabei stellt die Achse 32 den Desorptionsfluß bei einer bestimmten Bedeckung, z.B. 60%, dar. Kurven für andere Bedeckungen unterscheiden sich durch einen annähernd konstanten Faktor. Auf der Achse 31 ist die Temperatur aufgetragen. Tmin ist eine frei bestimmte Minimaltemperatur, Tmax ist die höchste Temperatur, die einen längeren Betrieb der Schicht ohne Zerstörung erlaubt.

Die Achse 34 stellt die Verweildauer der $NO_2$-Moleküle auf der Oberfläche dar, wobei die Verweildauer nach unten zunimmt.

Die Kurve 33 zeigt die Abhängigkeit von der Temperatur und Desorptionsfluß bzw. Verweildauer.

Ist eine Gaskonzentration in einer Größenordnung vorhanden, bei der die Zunahme der Bedeckung durch den Zustrom aus dem Gasraum gerade so groß ist wie die durch die Temperatur verursachte Bedeckungsabnahme aufgrund von Desorption, entsteht ein Gleichgewichtszustand. In diesem Fall ändert sich der Bedeckungsgrad nicht mehr und der Leitwert bleibt daher konstant.

Der beschriebene Effekt gilt grundsätzlich für alle gasempfindlichen Halbleiter, bei denen die Leitwertänderung auf Gasadsorption beruht. Beispielhaft seien Kupfer- oder Bleiphthalocyanin (später PC genannt) und $H_2S$ oder $AsH_3$ auch Zinndioxid genannt.

Dies gilt auch, wenn das adsorbierte Gas auf der Sensoroberfläche eine chemische Reaktion eingeht. Dann ist die Verweilzeit des Reaktionsproduktes ausschlaggebend, das die Leitfähigkeitsänderung auslöst.

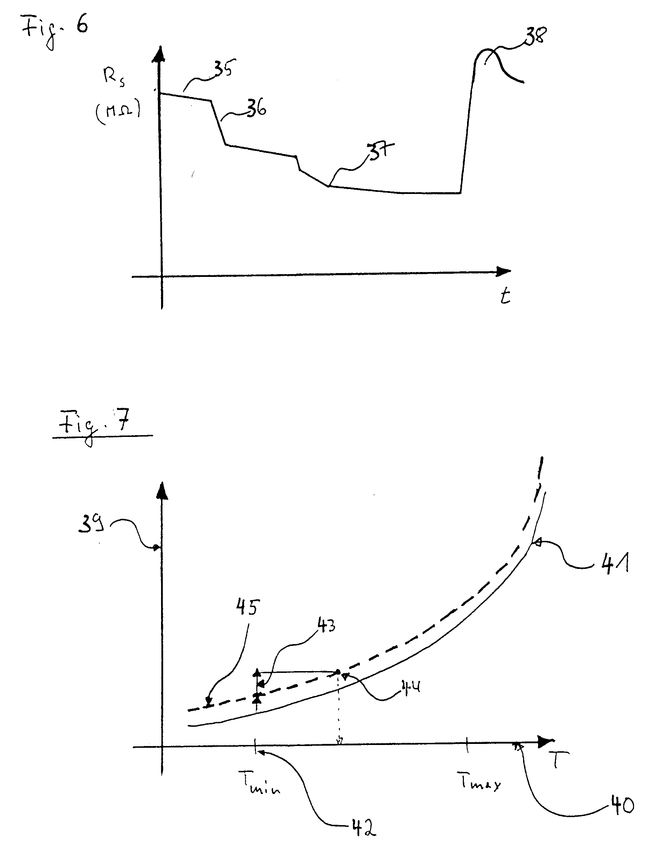

Stand der Technik zum Beispiel bei PC-Sensoren ist, daß die PC-Schicht auf konstanter Temperatur gehalten wird. Dabei ergibt sich regelmäßig ein Widerstandsverlauf nach Figur 6 mit der Folge, daß der Widerstand bei NO2-Impulsen 35, 36 sinkt und bei Erreichen eines bestimmten Mindestwiderstandes 37 das adsorbierte Gas vor der PC-Schicht durch Aufheizen 38 entfernt (desorbiert) werden muß. Die Meßzeit muß nachteilig für die Ausheizzeit unterbrochen werden. Nachteilig ist auch, daß durch die sehr unterschiedlichen Bedeckungen bei diesem Verfahren insbesondere bei hohen Bedeckungen Drifterscheinungen auftreten. (Auch Memory-Effekt genannt).

Ziel der hier vorgestellten Erfindung ist es, eine kontinuierliche Messung bei vorzugsweise gleichmäßiger Bedeckung zu erlauben. Vorteilhaft ist dabei, daß quantitative Aussagen zur Gaskonzentration mit hinreichender Genauigkeit gemacht werden können und daß der "Memory-Effekt" auch bei sehr großen Konzentrationssprüngen wirkungsvoll unterdrückt wird.

Es wird vorgeschlagen, die Sensortemperatur stets auf einen Wert einzustellen, bei dem die Desorption und die Adsorption sich in einem Gleichgewichtszustand befinden.

In Figur 7 wird der erfindungsgemäße Vorschlag näher erläutert.

Auf der Achse 39 ist der Leitwert aufgetragen, die Achse 40 zeigt die Temperatur. Die Kurve 41 entspricht der eingangs beschriebenen Funktion des Halbleiter-Leitwertes über die Temperatur in Abwesenheit von Gas. Die Kurve 45 entspricht der gleichen Funktion, jedoch bei einer konstanten, geringen Bedeckung von z.B. 5%, welche durch die Anwesenheit von Gas verursacht ist.

Die Kurve 41 wird einmalig ermittelt, z.B. durch Hochheizen des Sensors in Abwesenheit des Gases. Es wird vorgeschlagen, diesen Vorgang gelegentlich zu wiederholen, um Alterungserscheinungen auszuschließen.

Der praktische Betrieb wird am Beispiel eines PC-Sensors beschrieben, der z.B. mit NO2 beaufschlagt wird.

Beim Einschalten der erfindungsgemäßen Vorrichtung zur Durchführung des Verfahrens wird regelmäßig die Minimaltemperatur 42 angefahren. Dabei wird der Leitwert bei Tmin gemessen und dem dieser Temperatur auf der Referenzkurve entsprechenden Leitwert verglichen. Wenn der gemessene Leitwert größer ist als der durch die Kurve 45 gegebene Leitwert wird die Temperatur durch einen elektronischen Regler um einen bestimmten, frei wählbaren Wert erhöht. Dieser Vorgang wird vom elektronischen Regler solange wiederholt, bis der Leitwert auf der Kurve 45 liegt. Das Gesagte gilt sinngemäß, wenn ausgehend von einem so erhöhten Leitwert dieser unter den Stand der Kurve 45 sinkt.

In diesem Fall wird die Temperatur schrittweise herabgesetzt, bis der Leitwert auf der Kurve 45 liegt. Damit wird erreicht, daß der Sensor durch Anpassung der Temperatur an das Gasangebot eine konstante Bedeckung erreicht.

Dieser mit Hilfe der Referenzfunktion gefundene Leitwert - bei dem die Adsorption gleich der Desorption ist - ist ein Maß für die Gaskonzentration. Bei konstanter Konzentration ändert sich der Leitwert nach dem oben beschriebenen Anpaßvorgang nicht mehr. Entsprechend der Kurve 45 ist auch die Temperatur 40 ein Maß für die Gaskonzentration.

Es liegt auf der Hand, daß ein Regler ohne eingeprägte Referenzkurve diese Aufgabe nicht erfüllen kann, weil das Gasangebot eine Leitwerterhöhung auslöst, so daß sich kein stabiler Zustand erreichen läßt. Die denkbare Lösung, bei einer hohen Temperatur zu beginnen, verbietet sich, weil die Lebensdauer des Sensors unzulässig verkürzt würde und die Empfindlichkeit drastisch herabgesetzt wird.

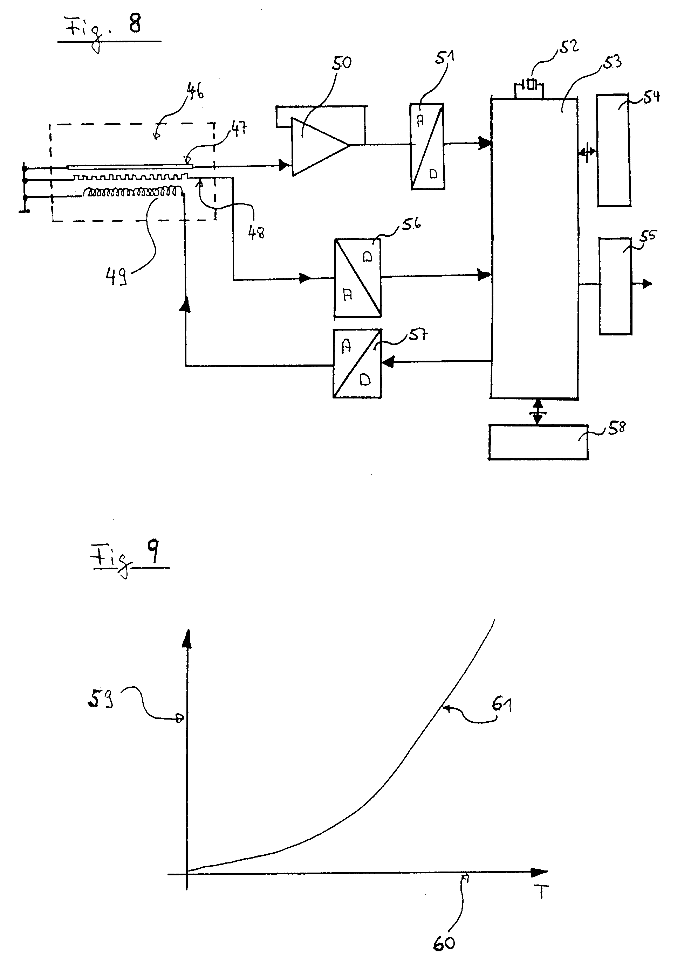

Figur 8 zeigt eine beispielhafte technische Lösung. Der Sensor 46 besteht typisch aus einem gasempfindlichen Halbleiter, z.B. Phthalocyanin 47, einem Heizelement 49 und einem geeigneten Temperatursensor 48, der z.B. durch eine Halbleiterdiode oder einen Platinwiderstand gebildet sein kann. Der Leitwert des Sensors 49 wird durch einen Impedanzwandler 50 und einen Analog/Digitalwandler 51 einem Mikroprozessor als zentrale Steuer- und Auswerteeinheit zugeführt. Der Wert des Temperatursensors 48 wird durch den Analog/Digitalwandler 56 ebenfalls dem Mikroprozessor 53 zugeführt.

Die Heizleistung wird vom Mikroprozessor und einem Digital/Analogwandler mit Leistungsausgang 57 dem Heizelement 49 zugeführt. Das Arbeitsprogramm des Mikroprozessors ist in einem unverlierbaren Speicher 54 abgelegt. Die vorstehend ermittelten Referenzkurven 45, 41 werden mit Hilfe des Arbeitsprogrammes wie vorstehend beschrieben ermittelt und die sich ergebenden Werte werden in einem weiteren Speicher 56 abgelegt. Über die Schnittstelle 55 wird die ermittelte Gaskonzentration weitergemeldet, wobei die Meldeleitung digital oder analog ausgebildet sein kann.

In einer weiteren Ausgestaltung, die im wesentlichen lediglich durch ein verändertes Steuerprogramm erzeugt werden kann, wird die Einstellzeit des Sensors auf große Gaskonzentrationssprünge verkürzt. Im vorstehend beschriebenen Fall wird durch die Vielzahl von Schritten die Annäherung des Leitwertes auf die Kurve 45 / Figur 7 erreicht. Da bekannt ist, daß die Anfangssteigerung unmittelbar nach einer Konzentrationsänderung des Gases Rückschlüsse auf die neue Konzentration erlaubt, ist damit ein sehr schneller Rückschluß auf den zu erwartenden neuen Arbeitspunkt auf der Kurve 45 möglich.

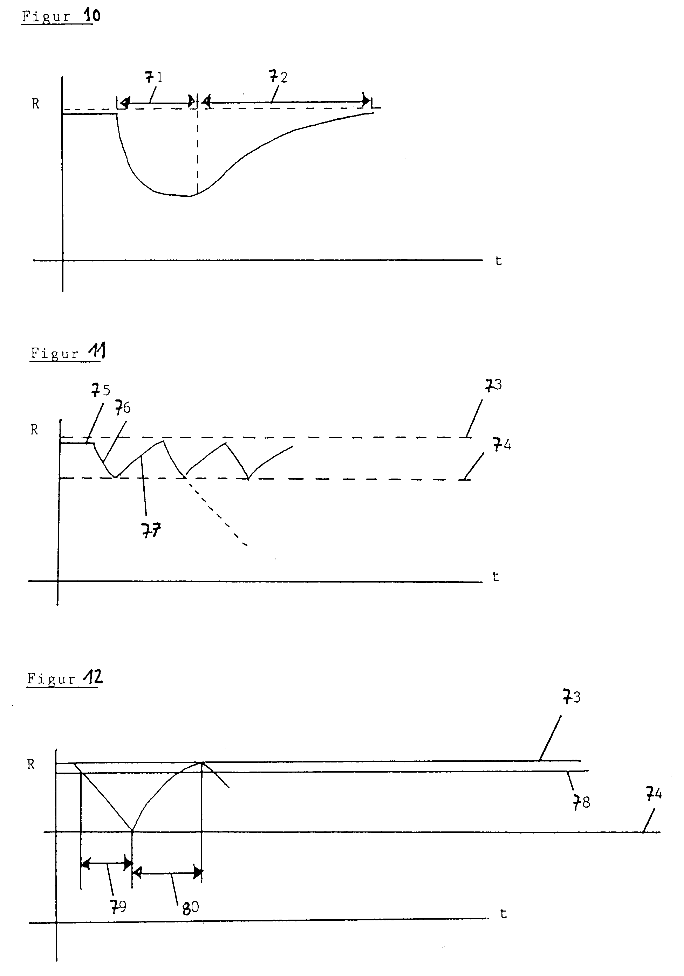

Figur 9 zeigt die Abhängigkeit der Steigung des Leitwertes 61 unmittelbar nach der Konzentrationsänderung, wobei 59 die Leitwertänderung pro Zeiteinheit ist und 60 die Temperatur des Sensors ist. Die für Kurve 61 maßgebende Konzentrationsänderung ist beliebig aber für alle Temperaturen gleich gewählt. Diese Kurve wird bei jedem Sensortyp ermittelt und im unverlierbaren Speicher 54 abgelegt. Das Programm stellt die Änderung des Leitwertes nach einer kurzen Zeit, z.B. 1 Sekunde, fest und ordnet entsprechend der in Figur 9 beschriebenen Kurve einer großen Leitwertänderung eine entsprechende Temperaturänderung zu.

Dabei wählt das Programm einen Temperatursprung, dessen Größe mit dem Quotienten aus der gemessenen Leitwertänderung zum in Kurve 36 angegebenen Referenzwert wächst. Referenzwert ist der Wert auf Kurve 61, der zur momentanen Meßtemperatur gehört.

Vorteilhaft wird dadurch bei großen Konzentrationssprüngen die Temperaturanpaßzeit und damit die Schnelligkeit des Sensors verkürzt. Da nach diesem Verfahren in jedem Fall der Leitwert entsprechend Figur 7 auf die Kurve 45 eingeregelt wird, beeinflußt die Qualität der Kurve 61 / Figur 9 die Genauigkeit der Anordnung nicht.

Erfindungsgemäß wird zur weiteren Durchführung des Verfahrens vorgeschlagen, im Falle der Verwendung von Phthalocyanin als Sensor und NO2 als Gas dem Sensor einen beheizten und vorzugsweise mit TiO2 oder SnO2 bzw. einem anderen leicht reduzierbaren oxid-beschichteten Platinwendel vorzuschlagen. Wird dieser Wendel durch Stromdurchfluß beheizt, zerlegt sich NO2 in N + O2, wodurch der Gasraum "gereinigt" wird und insofern das Ermitteln der Kurve 41 ermöglicht.

Erfindungsgemäß wird weiter vorgeschlagen, den Zustrom von Gas durch eine Diffusionssperre zu begrenzen, die z.B. durch eine Kapselung des Sensors erreicht wird, wenn die Zutrittsöffnung durch eine kleine Öffnung im Gehäuse ausgebildet ist.

Um bei großen Konzentrationen und den dann durch Sensorrauschen erzeugten Instabilitäten zu begegnen, wird ferner vorgeschlagen, die Kurven 41 und 45 nicht parallel verlaufen zu lassen. Vielmehr liegen die Kurven bei minimaler Betriebstemperatur sehr dicht beieinander, wobei der Abstand derjenigen Leitwertänderung entspricht, die mit dem Sensor minimalst detektiert werden soll. Mit steigender Temperatur entfernen sich die Kurven voneinander z.B. derart, daß der Quotient der Funktionswerte aus den Kurven 41 und 45 konstant bleiben. Rauschen tritt nicht immer auf. Es kann verursacht werden durch Korrosion der Kontakte insbesondere nach längerer Benutzungszeit in agressiver Atmosphäre. Letztendlich ist sogar denkbar, daß sich der Sensor bei altersbedingt anwachsendem Rauschen nochmal nachoptimiert.

Die vorbeschriebene Erfindung erhöht vorteilhaft die Lebensdauer des Sensors insbesondere bei typisch geringem Gasangebot, z.B. bei Warngeräten, weil die Arbeitstemperatur in diesem Fall typisch gering ist. Außerdem wirkt sich diese Tatsache vorteilhaft auf die für die Heizung notwendige Leistungsaufnahme aus, was für Batteriegeräte vorteilhaft ist. Dieser Umstand wirkt sich besonders günstig aus, wenn die Adsorption bereits bei Zimmertemperaturen zu einer Leitwertänderung führt, wie dies z.B. bei CO gegenüber goldbedecktem Zinnoxid der Fall ist. In diesem Fall entfällt in der Bereitschaftstellung jegliche Beheizung.

Es ist bekannt, daß manche organische Substanzen, beispielsweise Phthalocyanine, insbesondere Blei- oder Kupfer-Phthalocyanin, ihren elektrischen Widerstand verändern, wenn die Oberflächen bestimmten Gasen ausgesetzt werden. Dabei adsorbiert die Oberfläche Gasmoleküle, was zu einer Veränderung der p-Leitfähigkeit führt. Wird das Gasangebot weggenommen, desorbiert im Laufe der Zeit das Gas von der Oberfläche. Dieser Vorgang dauert bei Zimmertemperaturen sehr lange. Es ist bekannt, daß dieser Vorgang erheblich beschleunigt werden kann, wenn man die gasempfindliche Schicht beheizt.

Figur 10 zeigt einige typische Kurven, wobei Kupfer-Phthalocyanin-Schichten, die außerordentlich dünn auf ein beheizbares Substrat aufgebracht sind, Stickstoffdioxid ausgesetzt worden sind. Die Adsorptionszeit 71 ist hier kürzer als die Desorptionszeit 72.

Diese Sensoren sind außerordentlich empfindlich und sprechen bereits bei Konzentrationen von etwa 0,1 ppm Stickstoffdioxid an. Da es sich um einen relativ langsamen Adsorptions- bzw. Desorptionsvorgang handelt, besteht kein Zusammenhang zwischen dem Ohm'schen Widerstand der Phthalocyanin-Schicht und dem aktuellen Gasangebot. Es soll eine Methode aufgezeigt werden, die eine quasi kontinuierliche Angabe über Vorhandensein und Konzentration des Zielgases ermöglicht.

Figur 11 zeigt die prinzipielle Vorgehensweise. Die Linie 73 entspricht dem elektrischen Widerstand der Phthalocyanin-Schicht bei unbelasteter, normaler Luft. Auf einem Wert von etwa 80% dieses Widerstandswertes befindet sich eine willkürlich festgelegte Schwelle 74. Zu Beginn der Messung 75 hat der Sensor einen Widerstand, der dem Frischluftwiderstand entspricht.

Da der Sensor mit einer mäßigen Temperatur, z.B. von 80 Grad C, beheizt wird, wird dieser Wert gehalten. Bei einem kleinen Gasangebot 76 werden NO2-Moleküle adsorbiert und der Widerstand sinkt, wobei nach einer schadstoffkonzentrationsabhängigen Zeit die Schaltschwelle 74 erreicht wird. Eine elektrische Auswerte- und Steuereinheit erhöht daraufhin die Temperatur der Phthalocyanin-Schicht derart, daß schlagartig eine sehr hohe Desorption 77 einsetzt mit dem Ergebnis, daß die adsorbierten Moleküle die Schichtoberfläche verlassen und die Schicht wieder hochohmig wird.

Nach Ende des Heizvorganges wiederholt sich die Prozedur. Es besteht ein Zusammenhang zwischen der Gaskonzentration und der Veränderung des Schichtwiderstandes über die Zeit, wobei die Zeit gemessen wird, die benötigt wird, um ausgehend von der Null-Linie den gesetzten Widerstandswert zu erreichen. In einigen Anwendungsfällen ist die Null-Linie nicht völlig eindeutig, z.B. weil stets geringe Konzentrationen von NO2 oder einem anderen beeinflussenden Gas angeboten werden. Es wird vorgeschlagen, unterhalb des Reinluftwiderstandes einen zweiten Widerstandswert 78 zu bestimmen, der z.B. bei 90% des Widerstandswertes liegen kann. (Figur 12)

Wird bei Gasangebot der Widerstandswert 75 verändert und passiert diesen Widerstandwert 78, wird in der zentralen Steuer- und Auswerteeinheit eine Zeitmessung gestartet, die gestoppt wird, wenn ein zweiter, ebenfalls gesetzter Widerstandswert 74 erreicht wird, der z.B. 80% vom Reinluftwiderstand betragen kann. Die ermittelte Zeit 79 entspricht direkt das Gaskonzentration.

Da unmittelbar durch Aufheizen ein Desorptionsvorgang 77 eingeleitet wird, wird vorteilhaft erreicht, daß die Sensoroberfläche durch adsorbierte NO2-Moleküle niemals längerfristig und vollständig bedeckt wird. Damit werden als störend und verfälschend empfundene Langzeiteffekte vorteilhaft unterdrückt.

Die notwendige Desorption wird - wie erwähnt - durch Ausheizen bewirkt. Die Intensität der Ausheizung wird in Abhängigkeit vom Gasangebot gesteuert. Die Ausheiztemperatur darf einen bestimmten Wert nicht überschreiten, bei dem die Phthalocyanin-Schicht irreparabel Schaden nimmt. Darum wird die Ausheiztemperatur auf einen Wert festgelegt, der für die Struktur der Phthalocyanin-Schicht unschädlich ist.

Die Ausheizzeit 80 wird von der Meßzeit 79 abhängig gemacht. Es gilt folgender Zusammenhang. Ein geringes Gasangebot hat eine lange Meßzeit zur Folge. Bei einem geringen Gasangebot kann allerdings auch die Ausheizzeit kurz sein. Die zentrale Steuer- und Auswerteeinheit steuert die Ausheizzeit und/oder die Ausheiztemperatur in etwa umgekehrt proportional zur gaskonzentrationsabhängigen Meßzeit. Bei unterschiedlichem Gasangebot oder bei großem Gasangebot ist beobachtet worden, daß nach dem Ausheizen der obere Widerstandswert 79 oder mindestens ein Widerstandswert oberhalb der Linie 78 nicht erreicht wird. In diesem Fall verlängert die zentrale Steuer- und Auswerteeinheit die Ausheizzeiten um einen sich stetig vergrößernden Faktor solange, bis die Ausgangswerte wieder erreicht werden. Vorteilhaft wird dadurch eine zuverlässige und relativ unkompliziert zu handhabende Methode aufgezeigt, mit dessen Hilfe Gaskonzentrationen quasi kontinuierlich mit relativ schneller Reaktionszeit erkannt werden können.

Bei einem speziellen Ausführungsbeispiel wird vorgeschlagen, die Schaltschwellen 78, 74 nicht fest zu bestimmen, sondern vom zeitlich davor festgestellten Pegel, insbesondere Rauschpegel, abhängig zu machen und insofern nachzuführen.

In einigen Fällen ist es gewünscht, absolute Abwesenheit von NOx zu erzeugen. Dieses Ziel kann erreicht werden, indem dem Sensor ein Platin-Wendel vorgeschaltet wird. Am Übergangsmetall wird NOx zerlegt und kann den Sensor nicht mehr beeinflussen.

Es ist bekannt, Phthalocyanin-Sensoren (PC-Sensoren) zum Nachweis von Halogenen, z.B. C12, oder von HKW, z. B. dem Narkosegas Halothan, zu verwenden.

Zur Aufspaltung von HKWs sind sehr hohe Temperaturen erforderlich, z.B. 900 Grad C.

Dabei nimmt der Leitwert eines 0,1 mm Pt-Drahtes in 100 Stunden um 40% ab und brennt schließlich durch.

Es wird daher vorgeschlagen, den Pt-Draht mit Oxiden nicht-edler Metalle zu beschichten.

TiO2 oder SnO2 verhindert wirkungsvoll die Adsorption von Halogenen auf der Pt-Oberfläche.

Die Beschichtung wird hergestellt, indem man den Pt-Draht in eine Aufschlämmung von TiO2 taucht und dann tempert. Der Leitwert eines so beschichteten Wendels nimmt innerhalb von 100 Stunden um weniger als 3% ab. Eine Lebensdauer von > 1000 Stunden ist anzunehmen.

Ebenfalls wird vorgeschlagen, Pt durch Bedampfen oder Sputtern mit Ti oder Sn zu beschichten. Beim Heizen in Luft entstehen TiO2 oder SnO2 durch Oxidation dann von allein.

Werden solche als "Cracker" bezeichneten Wendel vor einem PC-Sensor angeordnet, werden bei bestimmten Temperaturen komplexe Verbindungen zerlegt, wobei die Reaktionsprodukte sich vom PC-Sensor nachweisen lassen.

Es wird vorgeschlagen, TiO2 oder SnO2 beschichtete Pt-Wendel PC-Sensoren vorzuschalten, um Halogene, halogenisierte Kohlenwasserstoffe, Perchlorethylen als auch verschiedene Herbizide, Insektizide als auch chemische Kampfstoffe nachweisen zu können.

Dem jeweiligen Zielgas ist eine spezifische Wendel-Temperatur zuzuordnen.

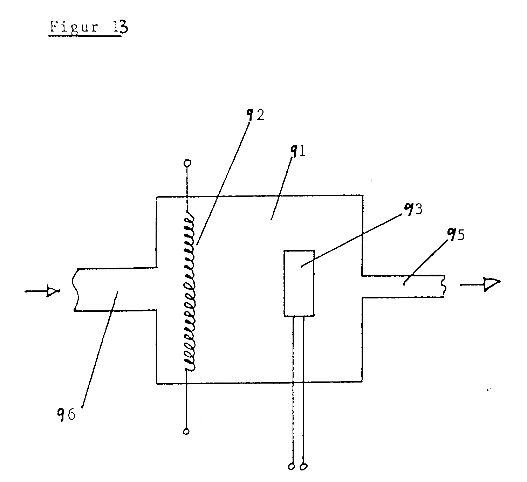

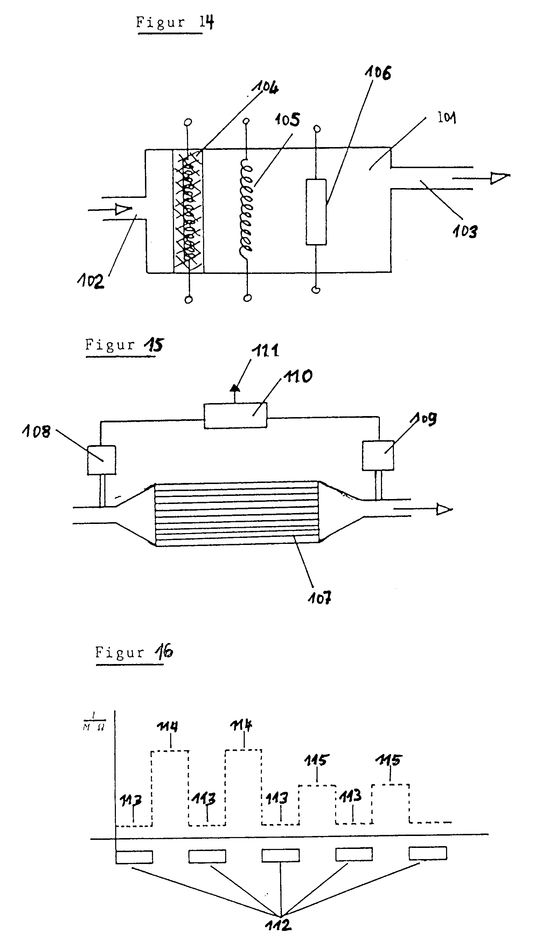

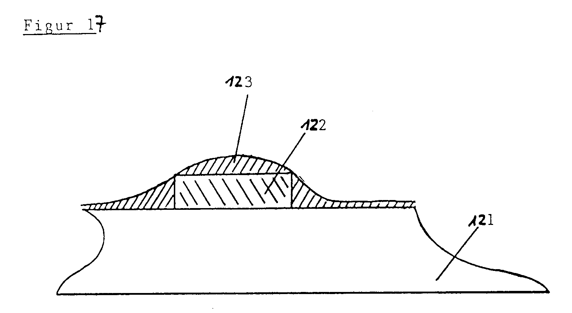

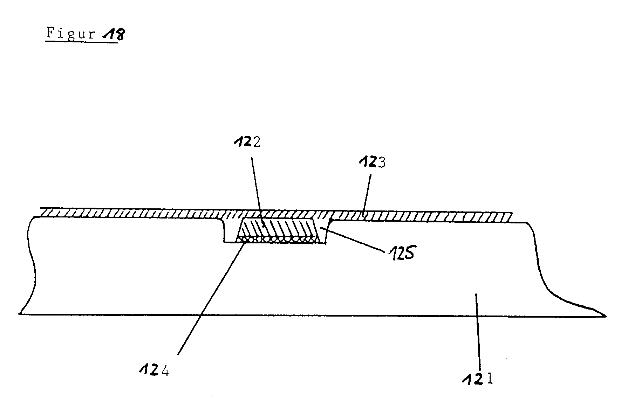

Figur 13 gibt den Gedanken im Prinzip wieder: In einer Reaktionskammer 91 befindet sich eine Zuströmöffnung 84 und eine Abströmöffnung 95. Die zugeführte Luft führt über einen beschichteten Pt-Wendel 92 zu dem PC-Sensor 93.

Es besteht zum Beispiel der Wunsch, die Funktion eines Automobil-Katalysators permanent zu überwachen. Dazu ist es notwendig, kontinuierlich die Konzentration von NOx vor und nach dem Katalysator zu überwachen.

Figur 15 zeigt das Prinzip:
Vor und nach dem Katalysator 107 befindet sich ein Sensor 108, 109, der NOx feststellt. Dessen Signale werden von einer Auswerteeinheit 110 übernommen und als Wirkungsgrad ins Verhältnis zueinander gesetzt.

Bei zu schlechtem Wirkungsgrad kann über die elektrische Leitung 111 ein Signal erfolgen oder über technische Eingriffe in die Motorelektronik eine Werkstattüberprüfung erzwungen werden.

Zur Detektion von NOx im komplexen Abgasgemisch wird folgendes Verfahren vorgestellt.

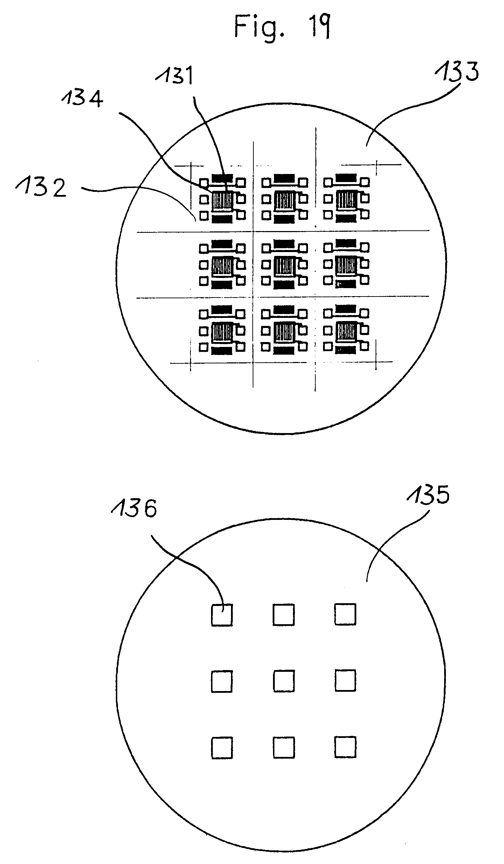

Figur 14 zeigt den prinzipiellen Aufbau.

Das Abgas kommt durch die Zuleitung 102 in die Meßkammer 101 und verläßt diese über die Ausströmöffnung 103. Im ersten Schritt wird aus dem Gemisch von NO und NO2 einheitlich NO2 hergestellt, indem das Gas über einen beheizten Katalysator 104 aus Chromoxid geleitet wird.
Dort reagiert

NO + 1/2 O2 wird NO2.

Im zweiten Schritt wird NO2 über einen beheizten und mit Ti O2 oder SnO2 beschichteten Platinwendel geführt. Wird dieser Wendel durch Stromzufuhr beheizt, zerlegt sich NO2 in 1/2 N2 und O2.

Der danach angeordnete Phthalocyanin-Sensor 106 erkennt diese Gase nicht und gibt kein Signal.

Wird jedoch der Heizstrom des Pt-Wendels 105 abgeschaltet, erzeugt NO2 am Phthalocyanin-Sensor ein eindeutiges Signal.

Durch periodisches Ein- und Ausschalten des Stromes entsteht ein typisches Signal, das in Figur 16 abgebildet ist.

In den Heizphasen 112 erkennt der Sensor kein Signal. Der jeweilige Pegel 111 ist entsprechend gering. Vor dem Katalysator 107 ist eine hohe NOx-Konzentration. Entsprechend hoch ist das Signal 114 am Sensor. Bei funktionierendem Katalysator 107 ist das entsprechende NOx-Signal 115 deutlich kleiner.

Das Verhältnis der Signalhöhen zueinander ist ein Maß für den Wirkungsgrad des Katalysators.

Vorteilhaft bei diesem Verfahren ist, daß eventuelle Quereinflüsse, z.B. durch SO2, zwar den absoluten Sensorwert verändern, nicht jedoch die durch Ein- und Ausschaltung verursachte Impulshöhe an den Sensoren.

Auf ein Trägermaterial 121, z.B. Silizium oder Al2O3, werden Kontaktbahnen in geeigneter geometrischer Struktur aufgebracht, um darauf einen dünnen Film 3, z.B. Phthalocyanin, auszubilden, welches seine elektrischen Werte in Abhängigkeit physikalischer oder durch Einwirken bestimmter Gase ändert.

Figur 17 zeigt den prinzipiellen Aufbau. Um die Ansprechgeschwindigkeit so aufgebauter Sensoren zu erhöhen wird angestrebt, die sensiven Schichten so dünn wie möglich zu machen, damit Diffusionsprozesse das Ansprechen nicht verzögern.

Nachteilig hat sich gezeigt, daß die Kontaktgabe an den Kontaktbahnen ungleichmäßig ist und die an den Kontaktkanten beobachtete sehr dünne und rißanfällige Struktur der sensiven Schicht die elektrischen Eigenschaften der Schicht verschlechtern. Typisch erhöht sich der Sensorwiderstand signitikant, z.B. um Faktor 100.

Eine Anordnung nach Figur 18 löst dieses Problem, indem im Substratmaterial vor Aufbringungen der Kontaktbahnen eine Einsenkung 125 bevorzugt geätzt wird, in welcher in einem weiteren Arbeitsgang die Kontaktbahn 122 so aufgebaut wird, das sie in der gleichen Ebene mit dem isolierenden Teil des Substrates abschließt. Die darauf aufgebrachte sensive Schicht ist vorteilhaft sehr gleichmäßig und unterliegt viel geringeren mechanischen Spannungen. Auch ist vorteilhaft der elektrische Widerstand aus vorgenannten Gründen erheblich geringer.

In der beschriebenen Anwendung war eine dünne Phthalocyanin-Schicht auf einer beheizten Interdigitalstruktur aufzubringen.

Die Ausführung senkte den Ohm'schen Widerstand etwa um Faktor 100, erhöhte die Ansprechgeschwindigkeit um Faktor 3 und setzte das Rauschen um Faktor 3 herab.

Es ist bekannt, gasempfindliche Sensoren derart herzustellen, daß auf einem mit Kontaktelementen versehenen Trägermaterial aus vorzugsweise Silizium eine dünne Schicht eines Materials aufgebracht wird, welches seine elektrischen Eigenschaften beim Kontakt mit Gas verändert. Unter anderem werden organische Halbleiter wie Phthalocyanin in sehr dünnen Schichten eingesetzt.

Die elektrische Verbindung zu diesem Sensorelement erfolgt mit dünnen Golddrähten - auch Bond-Drähte genannt -, welche mit Hilfe einer geeigneten Maschine an dafür vorgesehene Kontaktstellen - auch Bond-Pads genannt - angeschweißt werden.

Dieser Vorgang - auch Bonden genannt - kann in guter und dauerhafter Qualität nur erfolgen, wenn die Oberfläche der Bond-Pads noch nicht beschichtet ist.

Die Silizium-Einzelelemente werden aus einer einkristallinen Silizium-Scheibe hergestellt, die Waver genannt wird. Dabei wird der für das einzelne Silizium-Element erstellte Maskensatz so oft nebeneinander reproduziert, daß der gesamte Waver ausgenutzt ist und einige hundert Silizium-Elemente (Chips) aus einem einzigen Waver gewonnen werden können. Zur Weiterverarbeitung werden die Waver zersägt und in die einzelnen Elemente vereinzelt. Nach dem bisherigen Verfahren wurden die so erzeugten Silizium-Elemente mit Bond-Drähten versehen und auf einen Träger montiert. Der so produzierte Gassensor wird bisher im Hochvakuum mit der gasempfindlichen Schicht bedampft. In einer aktuellen Version wird die Substanz Phthalocyanin als gasempfindliche Schicht in einer Dicke zwischen 100 und 1000 Monolagen aufgedampft. Es liegt auf der Hand, daß dieses Verfahren relativ teuer ist und es erheblich kostengünstiger wäre, wenn ein kompletter Waver in einem einzigen Arbeitsgang beschichtet werden könnte, dann vereinzelt werden könnte, gebondet werden könnte und montiert werden könnte.

Dieser Überlegung steht die Tatsache entgegen, daß durch die aufgebrachte gassensitive Schicht, z.B. aus Phthalocyanin bestehend, keine zuverlässige Bondierung erreicht werden kann.

Es wird daher vorgeschlagen, aus dem vorhandenen Maskensatz zur Erstellung der Sensorelemente einen weiteren Maskensatz abzuleiten, in welchen ausschließlich Durchlaßöffnungen für die Beschichtung der eigentlichen Sensoroberfläche, also der Interdigitalstruktur, vorhanden sind, wobei die restliche Fläche des Sensorelementes, insbesondere die Bond-Pads, abgedeckt sind.

Figur 19 zeigt den zugrunde liegenden Gedanken:
Aus zwei identischen Waverscheiben 135, 133 werden die Maske 135 und die zu vereinzelnden Chips 183 gewonnen. Die relativ kleine aktive Fläche des Sensors 131 wird durch eine Öffnung 136 in der Maske 135 beschichtet. Die Umgebung 134 und insbesondere die Bond-Pads 132 sind abgedeckt.

Die zu erstellende Maske wird aus Silizium erstellt, wobei die Öffnungen der Maske geätzt werden. Da die so erstellte Maske aus den gleichen Konstruktionsunterlagen erstellt wird wie der zu beschichtende Waver, ist eine sehr hohe Maßhaltigkeit garantiert.

Vorteilhaft ist insbesondere, daß Silizium als Maskenmaterial Verwendung findet. Das ist von Bedeutung, weil damit die Maske über den gleichen Temperaturkoeffizienten verfügt wie der teilweise abzudeckende Waver. Damit ist eine hohe Maßhaltigkeit auch bei schwankenden Beschichtungstemperaturen gewährleistet. Vorteilhaft wird nunmehr der komplette Waver mit der gasempfindlichen Schicht bedampft, wobei die Maske das Auftragen des gasempfindlichen Materials, z.B. Phthalocyanin, nur auf den dafür vorgesehenen Stellen des Silizium-Trägers erlaubt und die Bond-Pads freiläßt. In späteren Arbeitsgängen wird der Waver vereinzelt, gebondet und montiert, was nunmehr ohne Qualitätsverlust möglich ist. Die Vorteile des Verfahrens sind neben einer bedeutenden Kostenersparnis in der größeren Qualität und Datentreue der produzierten Sensorelemente zu sehen.

Die Maske muß periodisch von z.B. Phthalocyanin befreit werden. Dies geschieht üblicherweise durch Erhitzen. Bei einer Metallfolienmaske kommt es zum Verziehen der Maske als Folge eines Spannungsausgleiches. Eine Silizium-Maske besteht dagegen aus einem einkristallinen Si-Waver mit einer sehr geringen Zahl von Versetzungen. Die Silizium-Maske hält deswegen auch bei wiederholter Wärmebehandlung ihre Form, so daß vorteilhaft nur geringe Kosten infolge großer Standzeit entstehen.

Gassensoren auf Basis aufgedampfter organischer Schichten gewinnen zunehmendes Interesse im Umweltschutz und bei der Produktionsüberwachung aufgrund ihrer spezifischen Widerstandsänderung bei Einwirkung toxischer Gase wie z.B. NOx, CO und NH3: durch Donator-Akzeptor-Wechselwirkung mit den adsorbierten Gasen wird die (Oberflächen-) Leitfähigkeit verändert.

Wichtige Bewertungsparameter für die Eignung als Gassensor sind:
- Selektivität gegenüber den zu detektierenden Gasen
- Empfindlichkeit
- Ansprechzeit

- Reversibilität und Stabilität

Hierbei sind besonders die beiden zuletzt genannten Punkte bei den organischen Schichten problematisch. Die Ansprechzeiten sind relativ lang, die Reversibilität ist aufgrund irreversibler Veränderungen der Schichtoberfläche verbesserungsbedürftig, und die Sensoreigenschaften verändern sich oft durch Modifikationsänderungen, die während des Betriebes oder auch schon während des Lagerns langsam ablaufen.

Aus der Literatur sind zahlreiche Versuche bekannt geworden, durch chemische Veränderungen - Austausch des Metall-Liganden, chemische Substituierung am PC-Ring - die Sensoreigenschaften zu verbessern. Jedoch zeigen vor allem jüngste Untersuchungen, daß die Sensoreigenschaften vorwiegend durch die physikalischen Schichtparameter Kristallinität, Schichtdicke, Porosität und Oberflächenbeschaffenheit bestimmt und somit auch beeinflußt werden können.

Gegenstand der Erfindung ist deshalb auch ein Dünnschicht-Gassensor auf organischer Basis mit verbesserten Eigenschaften durch gezielte Beeinflussung der Halbleiter- und mechanischen Schichteigenschaften, wobei die neuen Eigenschaften vor allem durch die Anwendung neuartiger Mischschichten insbesondere homogener Mischschichten aus organischen Farbstoffen und anorganischen Materialien, sog. Norganics, erzielt werden. Die Herstellung der beschriebenen Kompositschichten wird durch eine modifizierte MS-PVD-Technik (Multi Source Physical Vapour Deposition) ermöglicht, die eine Variation des Mischungsverhältnisses in weiten Grenzen gestattet.

Die verbesserten Eigenschaften werden erreicht durch:

A) Steigerung der Empfindlichkeit von Gassensoren durch Herstellung poröser Sensorschichten mit vergrößerter virtueller Oberfläche

    a) durch Extraktion löslicher Mischkomponenten

- Mischschichten MePc/Metallhalogenid; Wasserextraktion
- Mischschichten MePc/Metalloxid; Extraktion mit wässrigen Alkalien (z.B. bei $SnO_2$) oder Säuren (z.B. bei MgO)
- Mischschichten MePc/lösliche organische Zusätze; Extraktion mit organischen Lösungsmitteln oder Wasser (für z.B. kationische Farbstoffe)
- Mischschichten MePc/organische Säuren oder Anhydride; Extraktion mit verdünnten Alkalien

    b) - durch Reverdampfung der Beimischung aus der festen Schicht (z.B. verdampfbare organische Farbstoffe, Paraffin)

    c) durch Variation der Prozeßbedingungen, z.B. Substrattemperatur und Abscheiderate, bei MePc-Metalloxid-Mischsystemen

B) Steigerung der Reversibilität und Stabilität von Gassensoren durch Hinderung des Modifikationswechsels

    a) durch Einbau des Farbstoffes in eine feste anorganische Matrix aus z.B. Metalloxiden. Dadurch wird gleichzeitig eine Verbesserung der mechanischen Widerstandsfestigkeit der Sensorschicht erzielt

    b) durch Einbau des Farbstoffes in eine hochmolekulare organische Basis

- durch Mischverdampfung mit der hochmolekularen Verbindung, z.B. Paraffin
- als dye-in-binder System (Bindemittel z.B. F-Cellit, Gelatine, MSA-Copolymere).

C) Erzeugung von Gassensoren unterschiedlicher Selektivität durch gezielte Beeinflussung der elektronischen Eigenschaften der Farbstoff-Festkörperschicht

    a) durch Herstellung von Mischschichten aus mindestens zwei unterschiedlichen MePc

    b) durch Herstellung von Mischschichten aus einem MePc und einer weiteren organischen coverdampfbaren Substanz wie z.B. organische Farbstoffe, Donator- und Akzeptor-verbindungen

    c) durch Herstellung von Mischschichten aus einem MePc und anorganischen Halbleiterverbindungen (z.B. Pb- und Cu-Halogenide)

Weiterhin ist die Erfindung dadurch charakterisiert, daß

- die erforderlichen Mischschichten durch Multi Source Physical Vapour Deposition im Vakuum (Druckbereich 10 -3 bis 10 -8 Torr) hergestellt werden
- die verwendeten Mischungsverhältnisse MePc: Beimischung im Bereich von 5 bis 95 Vol-% MePc, vorzugsweise 50 Vol-% MePc, liegen
- die Abkürzung "MePc" für folgende Metallphthalocyanine steht: Cu-, Pb-, Mg-, VO-, TiO-, Lu-Phthalocyanin
- als Metallhalogenide vor allem Alkali- und Erdalkalimetall- sowie Bleihalogenide eingesetzt werden
- als Metalloxide vor allem $Sn_2$, ZnO, $SiO_2$ und $TiO_2$ Verwendung finden
- als wasserlösliche organische Zusätze eine Substanz aus z.B. einer der folgenden Stoffgruppen eingesetzt wird: kationische Farbstoffe (z.B. Rhodamin, Methylenblau), Ammoniumsalze und Pentaerythesit
- es sich bei den verdampfbaren organischen Zusätzen beispielsweise um einen Vertreter aus den folgenden Substanzgruppen handelt: Paraffine, polykondensierte und substituierte Aromaten (z.B. Anthracen), Azobenzene, Anthrachione, Perylene, Chinacridone und Merocyanine
- als organische Säuren und Anhydride vorzugsweise Maleinsäure und -anhydrid, Phthalsäure und -anhydrid sowie Staerinsäure zum Einsatz gelangen
- als organische Donatoren z.B. Tetrathiofulvalen, Tetramethyl-p-phenylendiamin und N-Vinylcarbazol sowie als organische Akzeptoren 2.4.7-Trinitrofluorenon, Tetracyanochinodimethan und Chlorranil verwendet werden.

**Patentansprüche**

1. Verfahren zur Gasmessung, bei dem ein Halbleitersensorelement eingesetzt wird, dessen Temperatur gemessen wird und dessen Leitwert bzw. Widerstand durch das Meßgas beeinflußbar ist, dadurch gekennzeichnet, daß die Temperatur und/oder der Leitwert bzw. Widerstand und/oder die Bedeckung mit Meßgas des Halbleitersensorelements durch Eingriffe beeinflußt und/oder als Meßgröße erfaßt werden.

2.  Vorrichtung zur Gasmessung, mit einem Halbleitersensorelement, dessen Temperatur meßbar und dessen Leitwert bzw. Widerstand durch das Meßgas beeinflußbar ist, dadurch gekennzeichnet, daß die Temperatur und/oder der Leitwert bzw. Widerstand und/oder die Bedeckung mit Meßgas des Halbleitersensorelements durch Eingriffe beeinflußbar und/oder als Meßgröße erfaßbar sind.

3.  Phthalocyanin-Sensor, vorzugsweise zum Einsatz in einem Verfahren bzw. in einer Vorrichtung nach Anspruch 1 bzw. 2, zum Zwecke des Nachweises von Stickoxiden (NOx) in der Luft, wobei die Phthalocyanin-Schicht in der Meßphase auf einer für die Meßaufgabe optimierten Temperatur betrieben wird und zyklisch durch zeitweilige Erhöhung der Temperatur abgereinigt wird, dadurch gekennzeichnet, daß die Meßphase (11) durch die Ausheizphase (12) stets dann abgelöst wird, wenn der Sensorwiderstand (2) einen vorgegebenen Wert (3) unterschreitet oder während der Meßphase der Sensorwiderstand eine Veränderung über die Zeit (4) erfährt, wenn diese Veränderung einen vorgegebenen Betrag überschreitet.

4.  Phthalocyanin-Sensor nach Anspruch 3, dadurch gezeichnet, daß der Änderungsbetrag des Phthalocyanin-Widerstandes über die Zeit als Maß für die NOx-Konzentration herangezogen wird, wobei durch eine elektronische Auswerte- und Steuereinheit (13) der Sensorwiderstand (14) periodisch bestimmt wird und Änderungen im Meßzeitraum mit abgespeicherten Werten verglichen werden, welche den Änderungsbetrag als Funktion der Gaskonzentration über die Zeit beschreiben.

5.  Verfahren und Vorrichtung nach Anspruch 1 bzw. 2, zum Nachweis von Gasen, wobei als gasempfindliches Sensorelement eine beheizbare Beschichtung aus z.B. Kupfer- oder Bleiphthalocyanin oder einem anderen Halbleiter, z.B. Zinndioxid, eingesetzt wird, und bei der die Temperatur des Sensorelementes durch einen geeigneten unmittelbar an der gasempfindlichen Schicht angeordneten Temperatursensor gemessen werden kann, wobei das Trägermaterial des Sensors sowohl aus z.B. Silizium als auch aus Aluminiumoxid bestehen kann, dadurch gekennzeichnet, daß der Leitwert der gasempfindlichen Beschichtung (47) über einen elektronischen Regler (53) durch Verändern der Leistung des Heizers (49) und damit der Temperatur der gasempfindlichen Beschichtung (47) auf eine Kurve (45) eingestellt wird, die im elektronischen Regler (53) fest eingeprägt ist, wobei die Kurve (45) den elektrischen Leitwert der gasempfindlichen Beschichtung bei einer frei bestimmten Bedeckung mit Molekülen des Zielgases als Funktion der Temperatur wiedergibt, wobei der elektronische Regler so ausgelegt ist, daß eine Abweichung des gemessenen Leitwertes der gasempfindlichen Schicht von der eingeprägten Kurve (45) eine tendenzrichtige Änderung der Temperatur bewirkt, solange, bis der gemessene Leitwert und die Temperatur im Rahmen einer frei bestimmbaren Toleranz wieder übereinstimmen.

6.  Verfahren bzw. Vorrichtung nach Anspruch 5, dadurch gekennzeichnet, daß der Leitwert der gasempfindlichen Schicht unter Berücksichtigung der eingeprägten Kurve (45) ein Maß für die angebotene Gaskonzentration ist.

7.  Verfahren bzw. Vorrichtung nach Anspruch 5, dadurch gekennzeichnet, daß die Temperatur der gasempfindlichen Schicht ein Maß für die angebotene Gaskonzentration ist.

8.  Verfahren bzw. Vorrichtung nach einem der Ansprüche 5 bis 7, dadurch gekennzeichnet, daß dem elektronischen Regler eine Funktion nach Figur 9 eingeprägt ist, die die Konzentration des angebotenen Gases als Funktion des Leitwertänderungsbetrages in Abhängigkeit von der Temperatur unmittelbar nach Zuführung des Gases beschreibt, wobei durch schnelle Erhöhung oder Verminderung der angebotenen Gaskonzentration es entsprechend der nach Figur 9 zu erwartenden Position auf der Kurve (45) programmgesteuert zu einer unmittelbaren Zuordnung der der Gaskonzentration entsprechenden Temperatur nach Kurve (45) kommt, wobei sich eine feine Einregelung entsprechend Anspruch 5 anschließt.

9.  Verfahren bzw. Vorrichtung nach einem der Ansprüche 5 bis 8, dadurch gekennzeichnet, daß bei Phthalocyanin als gasempfindlicher Schicht und NO2 als Zielgas vor dem Sensor ein mit einem leicht oxidierbaren Oxid beschichteter Platinwendel angeordnet ist, welcher programmgesteuert dann elektrisch beheizt wird, wenn der Leitwert der Phthalocyanin-Schicht als Funktion der Temperatur ermittelt wird, wozu programmgesteuert die zentrale Auswerte- und Steuereinheit (53) die Temperatur durch Verändern der Heizleistung zuordnet, wobei die Kurve (45) gebildet wird, indem der so ermittelten Kurve (41) ein kleiner und über den gesamten Temperaturbereich konstanter Betrag hinzugefügt wird, wobei der Betrag derjenigen Leitwertänderung entspricht, die mit dem Sensor minimalst detektiert werden soll.

10. Verfahren bzw. Vorrichtung nach einem der Ansprüche 5 bis 9, dadurch gekennzeichnet, daß die Zuordnung des Leitwertes zur Temperatur, also die Bildung der Kurve (41), bei beliebigen anderen gasempfindlichen Halbleitern wie in Anspruch 9 erfolgt, wobei die Ermittlung der Funktion stets ohne Anwesenheit des Zielgases erfolgt.

11. Verfahren bzw. Vorrichtung nach einem der Ansprüche 5 bis 10, dadurch gekennzeichnet, daß dem Sensor eine Diffusionssperre vorgeschaltet wird.

12. Verfahren bzw. Vorrichtung nach Anspruch 9 oder 10, dadurch gekennzeichnet, daß die Kurve (45) und die Kurve (41) nicht parallel verläuft, sondern daß der Quotient aus den Funktionswerten der Kurven (45) und (41) bei minimaler Betriebstemperatur so gewählt wird wie in Anspruch 9 beschrieben, und für alle höheren Temperaturen konstant bleibt.

13. Verfahren, vorzugsweise nach Anspruch 1, zur Bestimmung der Gaskonzentration mit Hilfe von gasempfindlichen Halbleitern, dadurch gekennzeichnet, daß nach Erreichen eines vorgegebenen Schwellwertes (78) für die Leitwertzunahme ein Meßzyklus gestartet wird, bei dem die Zeit (79) gemessen wird bis zum Erreichen eines weiteren Schwellwertes (74), was zur Folge hat, daß dann eine Temperaturerhöhung des Substrates bewirkt wird, wobei die Ausheizzeit (80) eine Funktion der Zeit (79) ist.

14. Verfahren nach Anspruch 13, dadurch gekennzeichnet, daß die Ausheizzeit (80) in etwa umgekehrt proportional zur Meßzeit (79) ist.

15. Verfahren nach Anspruch 13, dadurch gekennzeichnet, daß die Ausheizzeit (80) um einen stetig sich vergrössernden Faktor verlängert wird, wenn in einer Folge von Meßzyklen der Schwellwert (78) nicht wieder erreicht wird.

16. Verfahren nach einem der Ansprüche 13 bis 15, dadurch gekennzeichnet, daß stets dann, wenn ein Maximalwert der Ausheizzeit erreicht wird, ohne daß dadurch der Leitwert unter die Schwelle (78) zurückgeführt werden kann, im nachfolgenden Meßzyklus die Ausheiztemperatur erhöht wird, wobei die Temperatur schrittweise bis zu einem frei definierbaren Grenzwert gesteigert wird oder bis zu einem Wert, bei dem der Leitwert wieder den Schwellwert (78) unterschreitet.

17. Verfahren nach einem der Ansprüche 13 bis 16, dadurch gekennzeichnet, daß die Ausheizzeit (80) auf einen frei gewählten Wert gesetzt wird und die Ausheiztemperatur in etwa umgekehrt proportional zur Zeit (79) bis zu einem frei wählbaren Grenzwert angehoben wird.

18. Verfahren nach Anspruch 16 und 17, dadurch gekennzeichnet, daß zusätzlich die Ausheizzeit bei aufeinanderfolgenden Meßzyklen stufenweise bis zu einem frei wählbaren Grenzwert angehoben wird oder solange angehoben wird, bis der Leitwert den Grenzwert (78) unterschreitet.

19. Verfahren und Vorrichtung, vorzugsweise nach Anspruch 1 und 2, zur Detektion komplexer gasförmiger Verbindungen, wobei diese an einem beheizten Platinwendel aufgespalten werden, dadurch gekennzeichnet, daß der Platinwendel mit einer Oxidschicht nicht-edler Metalle bedeckt ist.

20. Verfahren und Vorrichtung nach Anspruch 19, dadurch gekennzeichnet, daß als Oxidschicht Ti O2 oder Sn O2 eingesetzt wird.

21. Verfahren und Vorrichtung nach Anspruch 19 oder 20, dadurch gekennzeichnet, daß die Temperatur des so beschichteten pt-Wendels spezifisch auf das zu findende Zielgas eingestellt wird.

22. Verfahren und Vorrichtung, vorzugsweise nach Anspruch 1 bzw. 2, zur Detektion von NOx in komplexen Gasgemischen, dadurch gekennzeichnet, daß in einem Gehäuse (101) NOx-haltige Gase (102) einströmen und wieder herausströmen (103), wobei die Gase zuerst eine Chromoxidlage (104) durchströmen, um anschliessend an einem elektrisch beheizten und mit TiO2 oder SnO2 beschichtetem Platin-Wendel (105) vorbeigeführt zu werden, um schließlich einen NOx-empfindlichen Phthalocyanin-Sensor (106) zu erreichen, wobei die Heizung des Pt-Wendels periodisch ein- und ausgeschaltet wird.

23. Verfahren und Vorrichtung nach Anspruch 22, dadurch gekennzeichnet, daß die Chromoxidlage elektrisch beheizbar ist.

24. Verfahren und Vorrichtung nach Anspruch 22 oder 23, dadurch gekennzeichnet, daß die von den NOx-Anteilen erzeugten und mit der Beheizung des Pt-Wendels einhergehenden Impulshöhen ein Maß für die NOx-Konzentration sind.

25. Verfahren und Vorrichtung nach einem der Ansprüche 22 bis 24, dadurch gekennzeichnet, daß sie vor und nach einem Automobil-Katalysator angeordnet ist, wobei die ermittelten NOx-Konzentrationen vor und nach dem Katalysator miteinander verglichen werden und bei Unterschreiten einer vorgegebenen Differenz ein Signal in einer Auswerteeinheit (110) erzeugen, welches über eine Alarmleitung weitere Maßnahmen auslöst.

26. Dünnfilmsensor, vorzugsweise zum Einsatz in einem Verfahren oder einer Vorrichtung nach einem der Ansprüche 1 bis 25, bestehend aus einem Substrat (121), einer kontaktgebenden Struktur (122) und einer sensitiven Schicht (123), dadurch gekennzeichnet, daß die kontaktgebende Struktur (122) so in eine Mulde (125) des Substrates eingesenkt ist, daß das Substrat und die kontaktgebende Struktur insgesamt eben ist, wobei die sensitive Schicht aus Blei- oder Kupferphthalocyanin besteht.

27. Dünnfilmsensor nach Anspruch 26, dadurch gekennzeichnet, daß die Substratoberfläche aus Siliziumdioxid ist, die kontaktgebende Struktur aus Gold ist.

28. Verfahren zur Herstellung von Gassensoren, vorzugsweise zum Einsatz in einem Verfahren bzw. einer Vorrichtung nach einem der Ansprüche 1 bis 27, auf einem Silizium-Träger, dadurch gekennzeichnet, daß die Beschichtung des dafür vorgesehenen Teiles der Sensoroberfläche (131) mit dem gasempfindlichen Material durch Sublimation im Vakuum derart erfolgt, daß mit Hilfe einer die gasempfindlichen Flächen freilassenden Öffnungen aufweisenden Maske alle weiteren Bereiche der Sensoroberfläche abgedeckt sind.

29. Verfahren nach Anspruch 28, dadurch gekennzeichnet, daß die Maske aus Silizium besteht und daß die Öffnungen durch Ätzen hergestellt werden, wobei die Herstellungsmasken für den Herstellungsprozeß der Masken aus den gleichen Unterlagen wie für den zu beschichtenden Waver abgeleitet sind.

30. Gassensor, vorzugsweise zum Einsatz in einem Verfahren bzw. einer Vorrichtung nach einem der Ansprüche 1 bis 29, dadurch gekennzeichnet, daß die Sensor-Schicht aus Mischschichten, insbesondere homogenen Mischschichten aus organischen Farbstoffen und anorganischen Materialien, besteht.

31. Gassensor nach Anspruch 30, dadurch gekennzeichnet, daß die Sensor-Schicht eine vergrößerte virtuelle Oberfläche aufweist, die durch Extraktion löslicher Mischkomponenten und/oder durch Reverdampfung einer Beimischung aus der Mischschicht und/oder durch Variation der Prozeßbedingungen, z.B. Substrattemperatur, Abscheiderate etc., erzielt wird.

32. Gassensor nach Anspruch 31 oder 31, dadurch gekennzeichnet, daß der Farbstoff in eine feste organische oder in eine hochmolekulare organische Basis eingebaut ist.

33. Gassensor nach einem der Ansprüche 30 bis 32, dadurch gekennzeichnet, daß die Mischschichten aus zumindest zwei unterschiedlichen MePc, aus einem MePc und einer organischen coverdampfbaren Substanz oder aus einem MePc und anorganischen Halbleiterverbindungen hergestellt sind.

34. Gassensor nach einem der Ansprüche 30 bis 33, dadurch gekennzeichnet, daß die Mischschichten durch Multi Source Physical Vapour Deposition im Vakuum bei einem Druckbereich zwischen 10 -3 bis 10 -8 Torr hergestellt werden.

35. Gassensor nach einem der Ansprüche 30 bis 34; dadurch gekennzeichnet, daß das Mischungsverhältnis MePc/Beimischung im Bereich von 5 bis 95 Vol-% MePc, vorzugsweise etwa 50 Vol-% MePc liegt.

36. Gassensor nach einem der Ansprüche 30 bis 35, dadurch gekennzeichnet, daß als MePc (Metallphthalocyanin) Cu-, Pb-, Mg-, VO-, TiO- und/oder Lu-Phthalocyanin verwendet wird.

37. Gassensor nach einem der Ansprüche 30 bis 36, dadurch gekennzeichnet, daß als Metallhalogenide vorwiegend Alkali- und Erdalkalimetall- sowie Bleihalogenide eingesetzt werden.

38. Gassensor nach einem der Ansprüche 30 bis 37, dadurch gekennzeichnet, daß als Metalloxide vorwiegend Sn2, ZnO, SiO2 und TiO2 verwendet werden.

39. Gassensor nach einem der Ansprüche 30 bis 38, dadurch gekennzeichnet, daß als wasserlöslicher organischer Zusatz ein kationischer Farbstoff, z.B. Rhodamin, Methylenblau, ein Ammoniumsalz und/oder Pentaerythesit verwendet wird.

40. Gassensor nach einem der Ansprüche 30 bis 39, bei dem als verdampfbarer organischer Zusatz Paraffine, polykondensierte und substituierte Aromaten, Azobenzene, Anthrachinone, Perylene, Chinacridone und/oder Merocyanine verwendet werden.

41. Gassensor nach einem der Ansprüche 30 bis 40, dadurch gekennzeichnet, daß als organische Säuren und Anhydride Maleinsäure und -anhydrid, Phthalsäure und -anhydrid sowie Staerinsäure verwendet werden.

42. Gassensor nach einem der Ansprüche 30 bis 41, dadurch gekennzeichnet, daß als organische Donatoren Tetrathiofulvalen, Tetragmethyl-p-phenylendiamin und N-Vinylcarbazol sowie als organische Akzeptoren 2.4.7-Trinitrofluorenon, Tetracyanochinodimethan und Chloranil verwendet werden.

Fig 1

EP 0 488 102 A2

14

Fig 2

Fig 3

Figur 4

Figur 5

16

Fig. 6

Fig. 7

Fig. 8

Fig. 9

Figur **10**

Figur **11**

Figur **12**

Figur 13

Figur 14

Figur 15

Figur 16

Figur 17

Figur 18

## Fig. 19